# FASCICULE DE BREVET EUROPEEN

(11) **EP 1 801 716 B1**
(45) Date de publication et mention de la délivrance du brevet: **28.11.2018**
(21) Numéro de dépôt: 06291997.2
(22) Date de dépôt: 20.12.2006
(51) Int. Cl.: G06F 17/30, G06Q 40/00

(54) **DIFFUSION DE DONNÉES PAR GROUPEMENT**
DATENÜBERTRAGUNG MIT DATENGRUPPIERUNG
DATA TRANSMISSION USING GROUPING

(30) Priorité: 21.12.2005 FR 0513044
(43) Date de publication de la demande: 27.06.2007
(73) Titulaire: FIS FINANCIAL SYSTEMS (FRANCE), 75002 Paris (FR)
(72) Inventeur: Porte, Patrice, 75012 Paris (FR)
(74) Mandataire: Novagraaf Technologies

(56) Documents cités:
- EP-A- 1 533 695
- FR-A- 2 755 559
- US-A1- 2002 188 665
- US-B1- 6 574 742

## Description

La présente invention se rapporte au domaine des transmissions de données depuis un serveur vers un poste distant. Elle concerne plus particulièrement une telle transmission dans le cas d'un volume de données important qui nécessite des actualisations.

Ce type de transmission est par exemple courant dans le domaine des outils informatiques boursiers. Dans ce domaine, des serveurs de diffusion transmettent régulièrement les données d'actualisation reçues par la ou les bourses, et doivent transmettre ces données afin que les clients du serveur puissent réagir aux actualisations boursières.

Or, aujourd'hui, le volume d'information à transmettre aux clients dans le domaine de la bourse est si important qu'il est avantageux de réaliser ces transmissions de façon efficace.

Dans le domaine des bases de données, une telle problématique de transmission d'un grand volume d'information peut se poser. Or, les bases de données utilisent classiquement un stockage persistant des données, c'est-à-dire que lorsque la valeur d'une donnée est actualisée au temps T, sa valeur au temps T-1 n'est pas perdue et reste stockée dans la base.

Ce type de stockage persistant permet en particulier de détecter facilement si la valeur d'une donnée a été actualisée ou non en comparant ses valeurs au temps T et au temps T-1 dans la base. Si ces deux valeurs sont différentes, on peut transmettre la nouvelle valeur aux clients distants pour actualisation.

Au contraire, dans le domaine boursier, les données sont stockées au niveau d'un serveur de diffusion de façon non persistante, c'est-à-dire que lorsque la valeur d'une donnée est actualisée, sa valeur précédente est effacée de la base. Il n'est donc pas possible de détecter les actualisations par simple comparaison entre les valeurs des données à deux instants distincts.

Afin de transmettre les actualisations des données d'un serveur de diffusion, une solution connue consiste à transmettre l'ensemble du contenu du serveur, soit régulièrement, soit sur requête du client distant.

Cependant, cette solution n'est pas efficace puisque dans l'ensemble des données transmises, certaines n'ont pas été actualisées et ne nécessitent pas a priori une nouvelle transmission.

Dans le cas d'un volume important de données, ce manque d'efficacité pose bien sûr des difficultés en terme de bande passante et de temps d'envoi.

Le document FR-2 755 559 fait état du problème d'encombrement des bandes passantes évoqué ci-avant. Ce document mentionne notamment que la bande passante est mieux utilisée et que le temps d'envoi est diminué uniquement si les données variables sont transmises. Le procédé décrit dans le document D1 compare les données stockées par rapport aux données à transmettre, et ne transmet que les données différentes. Ce procédé nécessite de comparer les données une à une, ce qui entraîne des lenteurs dans la mise à jour.

Le document US-2002/188665 décrit un procédé visant à mettre à jour de manière efficace des logiciels de transmission de données, visant à exécuter un algorithme de différenciation de version de mise à jour de contenus déjà enregistré côté abonné. Selon le procédé décrit, on produit un fichier de mise à jour binaire identifiant des étapes permettant de réaliser la mise à jour des informations. Le procédé est mis en oeuvre pour mettre à jour des logiciels de mises à jour de données, et non les données elles-même.

Il en va de même pour le procédé décrit dans le document EP-1 533 695. Ce document concerne la mise à jour de logiciels utilisés dans les téléphones portables ou autres assistants personnels. Pour réduire la taille des fichiers de mises à jour transmis, le document propose de charger des instructions de mise à jour et de générer des données mises à jour à partir des données stockées sur le portable et des instructions.

Le document US-6 574 742 concerne la réalisation d'une base de données médicales comprenant toutes les informations propres à plusieurs patients, y compris les informations du type radiographies se présentant sous forme d'images. Les problèmes exposés dans ce document sont la confidentialité des données transmises, la transformation de film ou de photos sous format numérique pour leur stockage, le stockage des données et la diminution des coûts de stockage d'images. Pour réduire la taille du flux de données transmis, les données sont compressées.

L'actualisation des données étant une problématique particulièrement importante dans le domaine de la bourse, il est donc avantageux d'améliorer l'efficacité des transmissions de données depuis un serveur de données réalisant un stockage non persistant des données vers un client distant.

A cet effet, la présente invention a pour objet un procédé de gestion de données à l'aide d'un serveur de diffusion (2) de données relié à une station distante (3), ledit serveur de diffusion (2) comprenant un premier ensemble de données (Dₜ), chacune desdites données étant associée à un identifiant de données (AA, FZ, TA, ZZ) et à au moins un attribut (AT), ledit procédé comprenant :
- une étape d'envoi consistant à
   ∘ regrouper (10) les données dudit premier ensemble de données (Dₜ) en au moins un groupe de données (GR1, GRN) en fonction dudit identifiant (AA, FZ, TA, ZZ) de données de chacune desdites données dudit premier ensemble de données (Dₜ);
   ∘ calculer (20), pour chacun desdits au moins un groupe de données (GR1,GRN), un identifiant de groupe (IDₜ1, IDₜN), en fonction dudit au moins un attribut (AT) de chacune desdites données regroupées au sein dudit groupe de données ;
   ∘ transmettre (30) les données de chacun desdits groupes de données ainsi que chacun desdits identifiants de groupe (IDₜ1, IDₜN) à ladite station distante (3);
- une étape d'actualisation consistant à :
   ∘ recevoir (40) un second ensemble de données (D_{t'}) d'actualisation dudit premier ensemble de données (Dₜ) au niveau dudit serveur de diffusion (2), chacune desdites données d'actualisation (D_{t'}) étant associée à un identifiant de données (AA, FZ, TA, ZZ) et à au moins un attribut (AT');
   ∘ regrouper (50) les données dudit second ensemble (D_{t'}) de données d'actualisation dans ledit au moins un groupe de données (GR1,GRN) en fonction dudit identifiant de données (AA, FZ, TA, ZZ) de chacune desdites données dudit second ensemble (D_{t'});
   ∘ calculer (60), pour chacun desdits au moins un groupe de données (GR1,GRN), un identifiant actualisé de groupe (ID_{t'}1, ID_{t'}N), en fonction dudit au moins un attribut (AT') de chacune desdites données d'actualisation (D_{t'}) regroupées au sein dudit groupe de données (GR1,GRN);
- une étape de comparaison comprenant les sous-étapes de :
   ∘ transmission (70) par ladite station distante (3) vers ledit serveur de diffusion (2), de chacun desdits identifiant de groupe de données reçus (IDₜ1, IDₜN) par ladite station distante à ladite étape d'envoi;
   ∘ comparaison par ledit serveur de diffusion (2), pour chaque groupe de données (GR1, GRN), dudit identifiant de groupe de données (IDₜ1, IDₜN) associé audit groupe de données (GR1,GRN), avec ledit identifiant actualisé de groupe de données (ID_{t'}1, ID_{t'}N), associé audit groupe de données (GR1, GRN);
   ∘ transmission (80) par ledit serveur de diffusion (2) à ladite station distante (3) du contenu du groupe de données (GRp, GRq, GRr) pour lequel l'identifiant de groupe de données (IDₜp, IDₜq, IDₜr) est différent de l'identifiant de groupe de données actualisées (ID_{t'}p, ID_{t'}q, ID_{t'}r).

De la sorte, grâce au regroupement des données en groupes de données, et à la seule comparaison entre les identifiants de groupes, seul le contenu des groupes qui ont été modifiés par une actualisation est envoyé à la station distante.

Ce procédé permet donc de s'affranchir de l'envoi du contenu des groupes de données qui n'ont pas été modifiés et donc de diminuer le volume de données transmis, tout en transmettant les informations pertinentes d'actualisation.

Dans le domaine boursier, les données transmises par le procédé sont par exemple des valeurs boursières, identifiées par un code lexicographique, pouvant prendre des valeurs allant par exemple de AA à ZZ.

Dans ce cas, on forme de préférence les groupes selon un ordre lexicographique en regroupant les valeurs selon ce code lexicographique, avec par exemple un premier groupe de valeurs dont le code va de AA à GZ, un second groupe de valeurs dont le code va de HA à MZ, un troisième groupe de valeurs dont le code va de NA à TZ, et un quatrième groupe de valeurs dont le code va de UA à ZZ. Il est cependant entendu que la répartition des valeurs peut être réalisée par d'autres moyens de regroupement reproductible, autre qu'un simple tri lexicographique

On calcule alors pour chacun des groupes précédemment définis, un identifiant du groupe correspondant à une clé calculée à partir des attributs de l'ensemble des valeurs boursières du groupe.

Le contenu de chaque groupe ainsi que les identifiants associés de chaque groupe sont alors envoyés à la station distante.

Lorsque la station distante requiert une actualisation des données, par exemple au moment de sa connexion au serveur de diffusion, elle envoie l'ensemble des identifiants de chacun des groupes telles qu'elle les a dernièrement reçus.

Le serveur procède alors à une comparaison entre les identifiants reçus de la station distante et les identifiants de groupe éventuellement actualisés si des données d'actualisation ont modifié le contenu des différents groupes.

Le serveur n'envoie alors que le contenu des groupes pour lesquels les identifiants de groupe ont été modifiés par l'actualisation des données. Il envoie également les clés des groupes qui ont été actualisés afin que le procédé puisse être itéré lors d'une nouvelle requête par la station distante.

D'autres buts et avantages apparaîtront à la lumière de la description et des dessins annexés dans lesquels :
- La FIG. 1 représente un exemple d'une étape d'envoi selon l'invention ;
- La FIG. 2 représente un exemple d'une étape de transmission selon l'invention ;
- La FIG. 3 représente un exemple d'une étape de comparaison selon l'invention.

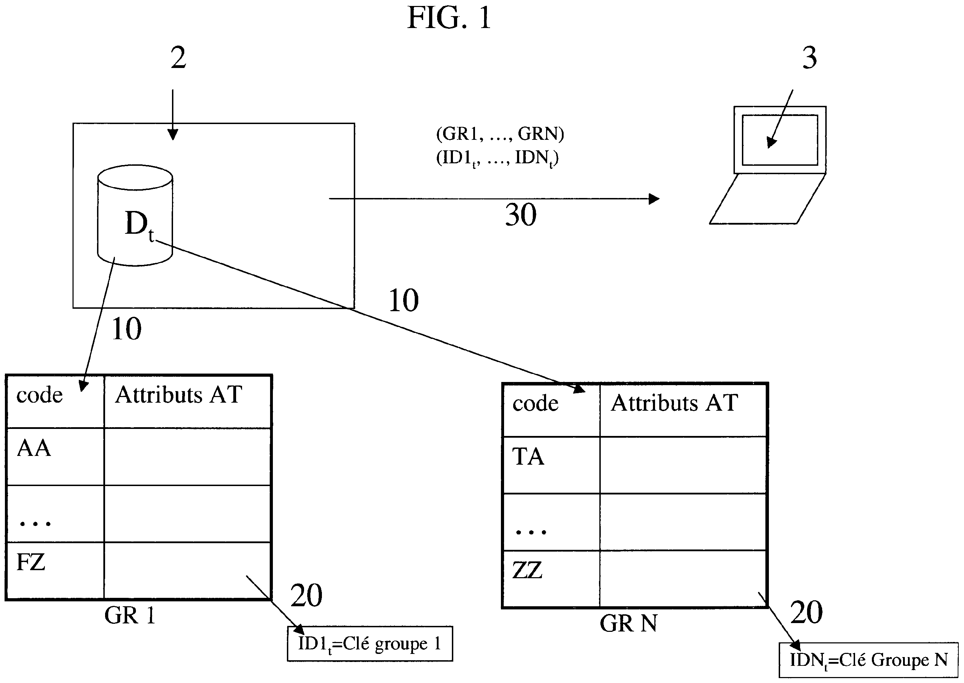

Illustré FIG. 1, un serveur de diffusion 2 comprend une base de données de valeurs à l'instant t, Dₜ. Au sein de cette base, ces valeurs peuvent être représentées sous la forme d'un code unique correspondant à la valeur, et d'une pluralité d'informations sur la valeur.

Aux fins de la présente description, le terme « valeur » peut désigner toute donnée décrite par une pluralité d'attribut dans un domaine particulier. A titre d'exemple, dans le domaine de la bourse, une « valeur » correspond à un instrument boursier, comme le nom d'une entreprise cotée en bourse. Le code unique de cet instrument boursier est alors par exemple un code à deux chiffres désignant cet instrument. De façon classique, on utilise par exemple les lettres AC pour désigner la société « Accor».

Les informations sur la valeur sont les attributs statiques de la donnée de valeur qui définissent la valeur, en outre du code unique. Dans le domaine boursier, ces informations sont par exemple le code ISIN, le groupe de cotation ou le libellé. Pour les options, ce peut être les données support, échéance, sens ou strike. Pour les stratégies, on peut ajouter les composantes de la stratégie, et pour les indices, on peut ajouter les composantes de l'indice et leur poids dans l'indice.

Lorsqu'un attribut d'une valeur n'est pas renseigné, on pourra lui attribuer la valeur numérique « 0 » ou le caractère lexicographique « espace » aux fins des différents calculs sur les attributs.

Les différents évènements pouvant se produire sur une valeur sont les suivants :
- création d'une valeur
- suppression d'une valeur
- modification de l'identifiant d'une valeur (correspondant en fait à une double étape de suppression de la valeur et de création d'une nouvelle valeur)
- modification d'au moins une information sur la valeur.

Selon l'invention, on regroupe 10 les données de la base de données de valeurs du serveur de diffusion 2 en une pluralité de groupes de données GR1, ..., GRN, en fonction du code unique associé aux valeurs. Comme illustré FIG. 1, dans le cas d'une identification lexicographique des valeurs, ce regroupement peut se faire de façon lexicographique.

Il est entendu que l'invention ne se limite pas au regroupement lexicographique et que tout type de groupement adapté au type de codage de la valeur peut être utilisé.

Sur la FIG. 1, on regroupe donc toutes les valeurs ayant un code lexicographique compris entre AA et FZ dans le groupe GR1, et ce jusqu'au dernier groupe comprenant les valeurs ayant un code lexicographique compris entre TA et ZZ. Il est entendu que l'on peut adapter le nombre de groupe et donc le découpage lexicographique aux contraintes de transmissions de données.

Pour chaque groupe, on calcule ensuite 20, un identifiant de groupe au temps t, IDₜ1, IDₜ2, ..., IDₜN. Ces identifiants de groupe sont calculés à partir des attributs AT des valeurs dans chaque groupe. Cet identifiant correspond par exemple à une clé de hashage sur l'ensemble des attributs de la valeur. Si un attribut n'est pas renseigné pour une valeur, le calcul de l'identifiant prend en compte l'attribut par défaut « 0 » ou « espace » tel que défini précédemment.

Une fois ces identifiants calculés, on transmet 30 à un poste client 3, l'ensemble des groupes GR1, ..., GRN correspondant aux données Dₜ au temps t, ainsi que l'ensemble des identifiants IDₜ1... ,IDₜN.

Cette étape de transmission correspond en fait à une étape d'envoi initial du procédé dans lequel on transmet l'ensemble des données de la base de données de diffusion au client. Ce n'est que dans cette étape préalable que toutes les données sont transmises au client 3.

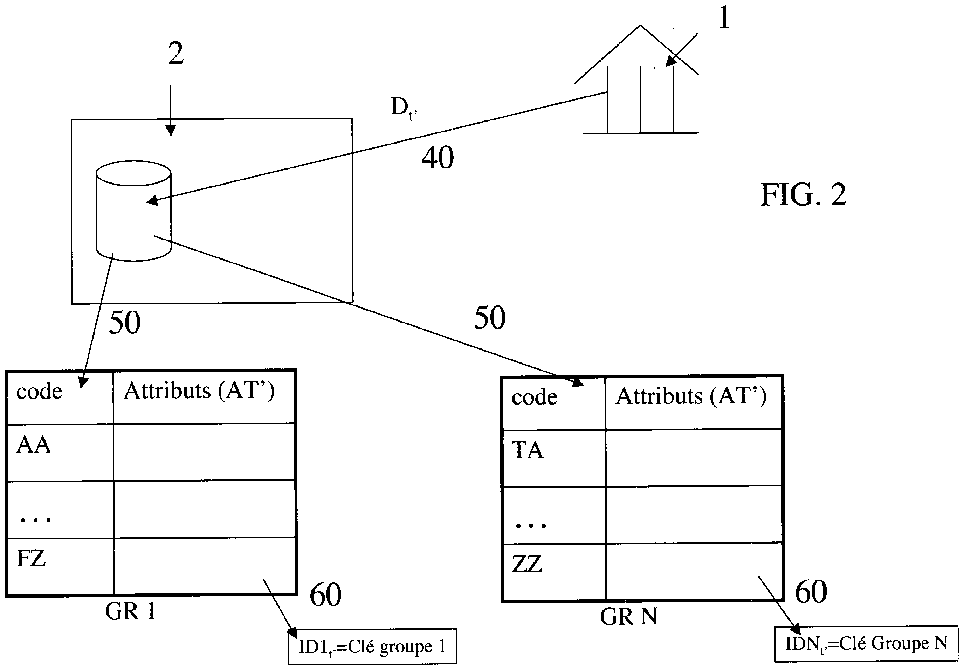

Illustré maintenant FIG. 2, les données du serveur de diffusion sont actualisées 40 par réception de données issues de la bourse 1. Au temps t', le contenu de la base de données du serveur de diffusion est donc maintenant D_{t'}.

On procède alors au sein du serveur de diffusion 2, à l'actualisation 50 des informations des valeurs au sein des groupes GR1, ..., GRN. Comme on l'a vu précédemment, cette actualisation peut correspondre à une suppression de valeur, à une modification de valeur, à une insertion de valeur, ou à une modification des attributs d'une valeur.

Sur ces données actualisées et regroupées dans les groupes GR1, ..., GRN, on recalcule les N identifiants de groupe correspond aux attributs actualisés au temps t'. On obtient donc 60, des identifiants ID_{t'}1, ... , ID_{t'}N.

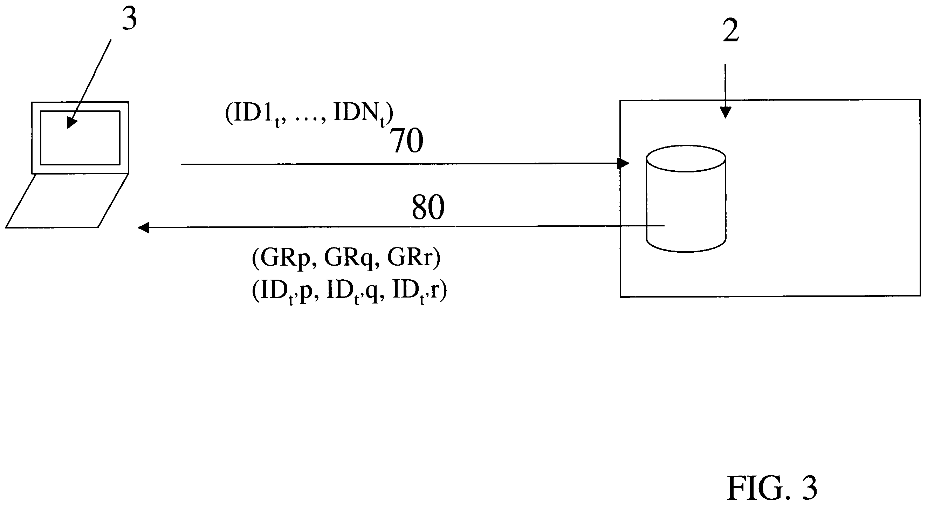

Illustré maintenant FIG. 3, lorsque le client 3 fait une requête afin d'obtenir du serveur de diffusion des données actualisée, il joint 70 à sa requête la liste des identifiants dernièrement reçus, ici les identifiants IDₜ1, IDₜ2, .., IDₜN. Dans ce cas, on fournit au client un logiciel apte à réaliser cette transmission d'identifiants de façon transparente, en plus de la requête de données. L'homme du métier est apte à réaliser un tel programme logiciel réalisant les fonctions telles que précédemment décrites. A réception des identifiants IDₜ1, IDₜ2, .., IDₜN, le serveur de diffusion compare ces identifiants de groupe, avec les identifiants de groupe éventuellement actualisés, ID_{t'}1, ... , ID_{t'}N.

Si les deux listes d'identifiants de groupe sont identiques, c'est que le contenu de tous les groupes n'a pas été modifié. Dans ce cas, on peut soit ne rien envoyer au client 3, soit envoyer un message d'acquittement d'actualisation, sans transmettre de données contenues dans les groupes GR1, ..., GRN.

Si les deux listes sont différentes, le contenu d'au moins un des groupes de données a été modifié entre le temps t et le temps t'. Les données ont donc réellement été actualisées, et Dₜ est différent de D_{t'}. Selon l'invention, le serveur de diffusion ne transmet au client que le contenu des groupes pour lesquels les identifiants de groupe ont été modifiés. Ainsi, si par exemple on a seulement IDₜp≠ ID_{t'}p, IDₜq≠ ID_{t'}q et IDₜr≠ ID_{t'}r, alors seuls les contenus des groupes GRp, GRq, et GRr, seront transmis 80 au client.

Encore une fois, l'homme du métier pourra implémenter facilement un programme réalisant les étapes de comparaison et d'envoi sélectif selon l'invention, au niveau du serveur de diffusion 2.

De la sorte, on économise l'envoi de données qui n'ont pas réellement été actualisées par la bourse, ce qui diminue la quantité de données transmises entre le serveur de diffusion 2 et le client 3. Le nombre de groupes peut par exemple être choisi en fonction de la fréquence de l'actualisation des attributs et de la fréquence des requêtes des clients. Le nombre de groupes est alors ajusté en fonction d'analyses statistiques des flux de production.

## Revendications

1. Procédé de gestion de données à l'aide d'un serveur de diffusion (2) relié à une station distante (3), ledit serveur de diffusion (2) comprenant un premier ensemble de données (Dₜ), chacune desdites données étant associée à un identifiant de données (AA, FZ, TA, ZZ) et à au moins un attribut (AT), ledit procédé comprenant :
- une étape d'envoi consistant à
∘ regrouper (10) les données dudit premier ensemble de données (Dₜ) en au moins un groupe de données (GR1, GRN) en fonction dudit identifiant (AA, FZ, TA, ZZ) de données de chacune desdites données dudit premier ensemble de données (Dₜ);
∘ calculer (20), pour chacun desdits au moins un groupe de données (GR1,GRN), un identifiant de groupe (IDₜ1, IDₜN), en fonction dudit au moins un attribut (AT) de chacune desdites données regroupées au sein dudit groupe de données ;
∘ transmettre (30) les données de chacun desdits groupes de données ainsi que chacun desdits identifiants de groupe (IDₜ1, IDₜN) à ladite station distante (3);
- une étape d'actualisation consistant à :
∘ recevoir (40) un second ensemble de données (D_{t'}) d'actualisation dudit premier ensemble de données (Dₜ) au niveau dudit serveur de diffusion (2), chacune desdites données d'actualisation (D_{t'}) étant associée à un identifiant de données (AA, FZ, TA, ZZ) et à au moins un attribut (AT');
∘ regrouper (50) les données dudit second ensemble (D_{t'}) de données d'actualisation dans ledit au moins un groupe de données (GR1,GRN) en fonction dudit identifiant de données (AA, FZ, TA, ZZ) de chacune desdites données dudit second ensemble (D_{t'});
∘ calculer (60), pour chacun desdits au moins un groupe de données (GR1, GRN), un identifiant actualisé de groupe (ID_{t'}1, ID_{t'}N), en fonction dudit au moins un attribut (AT') de chacune desdites données d'actualisation (Dₜ) regroupées au sein dudit groupe de données (GR1, GRN);
- une étape de comparaison comprenant les sous-étapes de :
∘ transmission (70) par ladite station distante (3) vers ledit serveur de diffusion (2), de chacun desdits identifiant de groupe de données reçus (IDₜ1, IDₜN) par ladite station distante à ladite étape d'envoi;
∘ comparaison par ledit serveur de diffusion (2), pour chaque groupe de données (GR1,GRN), dudit identifiant de groupe de données (IDₜ1, IDₜN) associé audit groupe de données (GR1,GRN), avec ledit identifiant actualisé de groupe de données (ID_{t'}1, ID_{t'}N), associé audit groupe de données (GR1,GRN);
∘ transmission (80) par ledit serveur de diffusion (2) à ladite station distante (3) du contenu du groupe de données (GRp, GRq, GRr) pour lequel l'identifiant de groupe de données (IDₜp, IDₜq, IDₜr) est différent de l'identifiant de groupe de données actualisées (ID_{t'}p, ID_{t'}q, ID_{t'}r).

## Patentansprüche

1. Verfahren zum Verwalten von Daten mithilfe eines Streaming-Servers (2), der mit einer entfernten Station (3) verbunden ist, wobei der Streaming-Server (2) einen ersten Datensatz (Dₜ) umfasst, wobei jedes der Daten einer Datenkennung (AA, FZ, TA, ZZ) und mindestens einem Attribut (AT) zugeordnet ist, wobei das Verfahren umfasst:
- einen Sendeschritt, bestehend aus:
-- Zusammenfassen (10) der Daten des ersten Datensatzes (Dₜ) in mindestens eine Datengruppe (GR1, GRN) in Abhängigkeit von der Kennung (AA, FZ, TA, ZZ) von Daten eines jeden der Daten des ersten Datensatzes (Dₜ);
-- Berechnen (20), für jede der mindestens einen Datengruppe (GR1, GRN), einer Gruppenkennung (IDₜ1, IDₜN) in Abhängigkeit von dem mindestens einen Attribut (AT) jedes der innerhalb der Datengruppe zusammengefassten Daten;
-- Übertragen (30) der Daten einer jeden der Datengruppen, sowie jeder der Gruppenkennungen (IDₜ1, IDₜN) zur entfernten Station (3);
- einen Aktualisierungsschritt, bestehend aus:
-- Empfangen (40) eines zweite Datensatzes (D_{t'}) zur Aktualisierung des ersten Datensatzes (Dₜ) im Bereich des Streaming-Servers (2), wobei jedes der Aktualisierungsdaten (D_{t'}) einer Datenkennung (AA, FZ, TA, ZZ) und mindestens einem Attribut (AT') zugeordnet ist;
-- Zusammenfassen (50) der Daten des zweiten Satzes (D_{t'}) von Aktualisierungsdaten in der mindestens einen Datengruppe (GR1, GRN) in Abhängigkeit von der Datenkennung (AA, FZ, TA, ZZ) jedes der Daten des zweiten Satzes (D_{t'});
-- Berechnen (60) für jede der mindestens einen Datengruppe (GR1, GRN) einer aktualisierten Gruppenkennung (ID_{t'}1, ID_{t'}N) in Abhängigkeit von dem mindestens einen Attribut (AT') jedes der innerhalb der Datengruppe (GR1, GRN) zusammengefassten Aktualisierungsdaten (D_{t'});
- einen Vergleichsschritt, die folgenden Unterschritte umfassend:
-- Übertragen (70) durch die entfernte Station (3) zu dem Streaming-Server (2) jeder der durch die entfernte Station beim Sendeschritt empfangenen Datengruppenkennungen (IDₜ1, IDₜN);
-- Vergleichen durch den Streaming-Server (2) für jede Datengruppe (GR1, GRN) der Datengruppenkennung (IDₜ1, IDₜN), die der Datengruppe (GR1, GRN) zugeordnet ist, mit der aktualisierten Gruppenkennung (IDₜ1, ID_{t'}N), die der Datengruppe (GR1, GRN) zugeordnet ist;
-- Übertragen (80) durch den Streaming-Server (2) zu der entfernten Station (3) des Inhalts der Datengruppe (GRp, GRq, GRr) bei dem sich die Datengruppenkennung (IDₜp, IDₜq, IDₜr) von der Gruppenkennung für aktualisierte Daten (ID_{t'}p, ID_{t'}q, ID_{t'}r) unterscheidet.

## Claims

1. A data management method using a broadcast server (2) connected to a remote station (3), said broadcast server (2) comprising a first data set (Dₜ), each of said data being associated with a data identifier (AA, FZ, TA, ZZ) and at least one attribute (AT), said method comprising:
- a sending step consisting of
∘ grouping (10) the data of said first data set (Dₜ) into at least one data group (GR1, GRN) depending on said data identifier (AA, FZ, TA, ZZ) of each of said data of said first data set (Dₜ) ;
∘ calculating (20), for each of said at least one data group (GR1, GRN), a group identifier (IDₜ1, IDₜN), depending on said at least one attribute (AT) of each of said data grouped within said data group;
∘ transmitting (30) the data of each of said data groups as well as each of said group identifiers (IDₜ1, IDₜN) to said remote station (3);
- an updating step consisting of:
∘ receiving (40) a second data set (D_{t'}) updating said first data set (Dₜ) at said broadcast server (2), each of said updating data (D_{t'}) being associated with a data identifier (AA, FZ, TA, ZZ) and with at least one attribute (AT');
∘ grouping (50) the data of said second updating data set (D_{t'}) within said at least one data group (GR1, GRN) depending on said data identifier (AA, FZ, TA, ZZ) of each of said data of said second set (D_{t'});
∘ calculating (60), for each of said at least one data group (GR1, GRN), a group updated identifier (ID_{t'}1, ID_{t'}N), depending on said at least one attribute (AT') of each of said updating data (D_{t'}) grouped within said data group (GR1, GRN);
- a comparison step comprising the sub-steps of:
∘ transmitting (70) from said remote station (3) to said broadcast server (2), of each of said data group identifiers (IDₜ1, IDₜN) received by said remote station at said sending step;
∘ comparison by said broadcast server (2) for each data group (GR1, GRN), of said data group identifier (IDₜ1, IDₜN) associated with said data group (GR1, GRN), with said data group updated identifier (ID_{t'}1, ID_{t'}N), associated with said data group (GR1, GRN);
∘ transmitting (80) from said broadcast server (2) to said remote station (3) of the content of the data group (GRp, GRq, GRr) for which the data group identifier (IDₜp, IDₜq, IDₜr) is different from the updated data group identifier (ID_{t'}p, ID_{t'}q, ID_{t'}r).
